# EUROPÄISCHE PATENTSCHRIFT

(11) **EP 2 428 471 B1**
(45) Veröffentlichungstag und Bekanntmachung des Hinweises auf die Patenterteilung: **05.06.2013**
(21) Anmeldenummer: 11176569.9
(22) Anmeldetag: 04.08.2011
(51) Int. Cl.: B65G 23/18, B65G 47/51

(54) **Fördersystem**
Conveying system
Convoyeur

(30) Priorität: 08.09.2010 DE 102010040410; 08.09.2010 DE 102010040413
(43) Veröffentlichungstag der Anmeldung: 14.03.2012
(73) Patentinhaber: Krones AG, 93073 Neutraubling (DE)
(72) Erfinder: Hüttner, Johann, 84066 Mallersdorf-Pfaffenberg (DE); Seger, Martin, 92318 Neumarkt i.d.Opf. (DE)
(74) Vertreter: Grünecker, Kinkeldey, Stockmair & Schwanhäusser

(56) Entgegenhaltungen:
- EP-A1- 0 442 200
- EP-A1- 1 849 725
- WO-A1-2010/005300
- US-A- 4 054 202

## Beschreibung

Die Erfindung betrifft ein Fördersystem gemäß Oberbegriff des Patentanspruchs 1.

In Flaschenbehandlungsmaschinen ist zum Transportieren der Flaschen, bspw. PET-Flaschen, zwischen verschiedenen Stationen ein Fördersystem vorgesehen. In dem Fördersystem können mehrere Förderwege vorgesehen sein, zwischen denen die Flaschen zum Verteilen oder Sortieren zu transferieren sind. Alternativ oder additiv kann in das Fördersystem ein Speicher variabler Kapazität eingegliedert sein, der bei Ausfall oder Störung einer Station angelieferte und nicht mit derselben Rate angenommene Flaschen zwischenspeichert, oder bei schnellerer Abnahmerate genügend Flaschen liefert, um einen Zeitpuffer zu schaffen, innerhalb dessen im Idealfall die Störung beseitigt wird, so dass die Flaschenbehandlungsmaschine kontinuierlich betreibbar ist. In beiden Fällen ist es Standard, die Flaschenträger-Kette gleichzeitig als Zugelement zu benutzen, auf das die Förderbewegung aufgebracht wird. Für einen Spurwechsel zwischen unterschiedlichen Förderwegen jeweils mit einer Flaschenkette ist es erforderlich, Flaschen von einer Flaschenträger-Kette abzunehmen und auf die andere Flaschenträger-Kette zu transferieren. Hierbei sind gleich viele Zugelemente und Flaschenträger-Ketten erforderlich. Aufgrund der zweifachen Aufgabe als Zugelemente benutzter Flaschenträger-Ketten, nämlich der lasttragenden Funktion und der antreibenden Funktion, sind solche Flaschenträger-Ketten aufwändig, teuer und schadensanfällig. Im zweiten Fall eines Speichers mit der die Antriebsfunktion und die Lasttragefunktion erfüllenden Flaschenträger-Kette ist es erforderlich, die Flaschenträger-Kette beim Umlenken aus einer Führung zu lösen und in eine andere einzuführen. Außerdem muss die die Antriebsbewegung entlang der Führungen und die Lasttragefunktion erfüllende Flaschenträger-Kette z.B. als Endlosschlaufe eine sehr große Länge aufweisen.

Aus DE 10 2004 053 663 A ist ein Fördersystem einer Flaschenbehandlungsmaschine bekannt, bei dem im als Speicherturm ausgebildeten Speicher zwei benachbarte Führungen spiralförmig angeordnet sind, in denen zumindest ein Teil einer Endlosschlaufe der Flaschenträger-Kette geführt und angetrieben wird, und an denen ein Schlitten mit zwei spiegelbildlichen Transferführungen verfahrbar ist, um die Kapazität des Speichers bedarfsabhängig variieren zu können. Die Flaschenträger-Kette wird direkt entlang der Führungen angetrieben, ist eine Spezialgliederkette und trägt oberseitig plattenförmige Flaschenträger oder Flaschengreifer. Im jeweiligen Transferierbereich wird die Flaschenträgerkette mit mechanischen Hilfsmitteln der Transferführung aus der Führung gelöst, in der Transferführung geführt und umgelenkt, und mit mechanischen Hilfsmitteln wieder in die andere Führung eingebracht. Daraus resultieren erhebliche Belastungen, so dass die Flaschenträger-Kette auch wegen der beträchtlichen Last sehr stabil und schwer ist, und eine relativ hohe Antriebsleistung erforderlich ist, die die Flaschenträger-Kette wiederum unter erhebliche lokale Zugspannungen setzt. Es kann bei dieser auch als Zugelemente fungierenden Flaschenträger-Kette beispielsweise auch reibschlüssiger Kontakt zwischen den Flaschen, den Führungen und dgl. entstehen, der zu Verschmutzung und Verschleiß der Flaschen führt.

Aus EP 0 581 143 B ist ein Fördersystem einer Zigaretten-Behandlungsmaschine bekannt, in welchem entweder ein einziges kettenartiges Förderelement gleichzeitig zur Einleitung der Antriebsbewegung und zum Tragen der Last verwendet wird, oder in zwei getrennten Führungen jeweils ein lasttragendes Förderelement eigenständig angetrieben wird. In das Fördersystem ist ein Speicher variabler Kapazität eingegliedert, der zumindest eine Transferführung zum Umlenken des Förderstroms von einer Führung auf die andere Führung aufweist. Im Falle nur eines einzigen endlosen Förderelementes wird dieses im Transferbereich aus einer Führung gelöst, transferiert und in die andere Führung wieder eingesetzt. Im zweiten Fall mit den beiden, unabhängig voneinander antreibbaren Förderelementen in den zwei Führungen ist die Transferführung als brückenförmiges Förderelement ausgebildet, das den Zigarettenstrom von einem Förderelement abnimmt, transferiert und auf das andere Förderelement aufbringt.

Aus EP 1 161 391 B ist ein Güter-Fördersystem mit einem Speicher variabler Kapazität bekannt, in welchem zwei Gutträger-Ketten in zwei nebeneinander laufenden Führungen geführt und angetrieben werden, die gleichzeitig eine Lasttragefunktion erfüllen. Im Transferbereich ist eine drehbare Förderscheibe zwischen den Führungen und diesen entlang beweglich angeordnet, die gleichzeitig von beiden Gutträger-Ketten drehangetrieben wird, um Güter aufnehmen, transferieren und auf die andere Gutträger-Kette umladen zu können.

Aus EP 1 232 974 B ist ein im Wesentlichen geradliniges Fördersystem für gleiche oder ähnliche Gegenstände bekannt, die bei der Stückgutverarbeitung in mehreren Verarbeitungsschritten behandelt werden. Im Förderweg ist eine Führung für eine Gutträger-Kette vorgesehen, die nur eine Lasttrage- und Förderfunktion erfüllt. Beiderseits der Führung sind Zahnriementriebe oder Antriebsräder angeordnet, die mit einer der gewünschten Fördergeschwindigkeit entsprechenden Umlaufgeschwindigkeit angetrieben werden, und diese Umlaufgeschwindigkeit auf die Gutträger-Kette übertragen, mit der sie sich eine bestimmte Wegstrecke überlappen. Die Übertragung der Antriebsgeschwindigkeit erfolgt durch Magnetwirkung, indem die Riementriebe oder die Antriebsscheiben Serien vom Permanentmagneten tragen, und an den einzelnen Gutträgern der Gutträger-Kette magnetisch beaufschlagbare Ankerteile oder Magneten angeordnet sind.

Der Erfindung liegt die Aufgabe zugrunde, ein Fördersystem der eingangsgenannten Art anzugeben, das betriebssicher, universell variabel betreibbar ist, und im Betrieb nur moderaten Kräften und Spannungen unterworfen wird, und bei dem in einem Transferbereich kein Verschleiß und keine Verschmutzung der Flaschen auftreten. Das Fördersystem soll sich bevorzugt in einem Speicher durch eine kostengünstige und leichte Ausbildung sowie einen verschleißarmen und störungsunanfälligen Betrieb auszeichnen.

Die gestellte Aufgabe wird mit den Merkmalen des Patentanspruchs 1 gelöst.

Durch die Trennung der Funktion der Aufnahme und Übertragung der Antriebsgeschwindigkeit und die Funktion des Lasttragens und Förderns der Flaschen hat jedes Zugelement ausschließlich treibende Funktion, ohne nennenswerte Traglasten aufnehmen oder abstützen zu müssen. Es ist ein Antrieb des Zugelements durch einen oder mehrere Motoren möglich, die, vorzugsweise, dicht hintereinander angeordnet sein können, so dass die im Zugelement wirksame Zugkraft auf einem niedrigen Niveau gehalten werden kann. Das Zugelement kann deshalb relativ filigran und leicht ausgebildet sein, wodurch auch sein Bewegungswiderstand gering bleibt, und nur geringe Massen zu bewegen sind. Da die Flaschenträger-Kette nur die lasttragende und die fördernde Funktion hat und Flaschen im Transferbereich wie entlang der Führungen fördert, lässt sie sich aus einfachen Flaschenträgern zusammensetzen, die kurvengängig gekoppelt sind und die Traglast direkt auf Führungselemente ableiten, ohne die Zugelemente damit zu belasten. Die Magnetkupplungen ermöglichen eine schlupffreie Übertragung der Zugkräfte, die entlang der gesamten Überdeckungslänge zwischen der Führung und dem Trum der Flaschenträger-Kette gleichmäßig verteilt werden, so dass die Flaschenträger-Kette wie auch jedes Zugelement nur einer geringen lokalen Zugspannung unterworfen werden, was die Kopplungen zwischen Flaschenträgern schont und eine leichte und kostengünstige Ausbildung der Flaschenträger-Kette ermöglicht. Im Transferbereich ist weder ein gesonderter Transfer der Flaschen erforderlich, noch brauchen komplizierte oder verschleißanfällige Schaltglieder an den Zugelementen mechanisch aus- und eingekoppelt zu werden, da die Magnetkupplungen selbsttätig dann gelöst bzw. eingerückt werden, wenn die Flaschenträger-Kette von einem Zugelement gelöst oder mit dem anderen Zugelement wieder verbunden werden muss. Die Führungen dienen hauptsächlich zum Führen der angetriebenen Zugelemente und können einfach ausgebildet werden. Dank der Magnetkupplungen wird jedoch entlang der Wegstrecke, in der sich die Flaschenträger-Kette beim Zugelement befindet, durch die verteilten Kupplungskräfte der Magnetkupplungen eine saubere Führungen auch der Flaschenträger-Kette erzielt, obwohl die Flaschenträger-Kette und das Zugelement durch den Luftspalt voneinander getrennt sind, so dass zwischen dem Zugelement und der Flaschenträger-Kette und/oder Flaschen kein Verschleiß entsteht und auch keine Verschmutzungen übertragen werden.

Bei einer zweckmäßigen Ausführungsform wird jede Magnetkupplung durch eine von der Transferführung erzwungene Relativbewegung zumindest eines Flaschenträgers gegenüber dem Zugelement gelöst und eingerückt. Dank des Luftspalts zwischen dem Flaschenträger und dem Zugelement herrscht eine relativ exakt vorherbestimmbare und unter den Magnetkupplungen weitgehend gleichbleibende Halte- und Führungskraft, die bereits nach einer geringen Relativbewegung degressiv stark nachlässt bzw. nach einer geringen abschließenden Relativbewegung progressiv sofort erreicht wird. Dies bedeutet, dass nur ganz am Anfang und ganz am Ende eines Transfers nennenswerte Kräfte zwischen der Transferführung und den Flaschenträgern zu übertragen sind. Das Lösen und Einrücken der Magnetkupplungen erfolgt sanft, so dass die Flaschen keinen nennenswerten Vibrationen ausgesetzt werden.

Die Erfindung ist besonders zweckmäßig für ein Fördersystem mit einem Speicher, wobei im Speicher die Transferführung ein entlang der Führungen für die Zugelemente verfahrbarer Transferumkehrbogen für die dann endlos ausgebildete Flaschenträger-Kette sein kann. Die Zugelemente werden entlang der Führungen in entgegengesetzten Richtungen mit variablen Geschwindigkeiten, vorzugsweise, voneinander unabhängig, angetrieben. Die Magnetkupplungen werden durch die Einwirkung des Transferumkehrbogens auf die Flaschenträger-Kette im Transferbereich selbsttätig gelöst und eingerückt. Es sind keine anderen mechanischen Hilfsmittel als der Transferumkehrbogen für das Lösen und Einrücken der Magnetkupplungen erforderlich. Die Magnetkupplungen arbeiten über lange Standzeiten verschleißfrei und ohne Nachlassen der Kupplungswirkung. Ferner sind sie und ihre Wirkung nicht anfällig gegen Gase, Strahlen oder Flüssigkeiten, die in Flaschenbehandlungsmaschinen oftmals eingesetzt werden.

Bei einer alternativen Ausführungsform des Fördersystems sind zwei oder mehr als zwei Führungen mit je nur einem Zugelement vorgesehen. Zumindest zwei der Zugelemente werden in gleichen Richtungen und synchron angetrieben. Die Transferführung ist entweder eine Weiche zum Spurwechsel der Flaschenträger-Kette zwischen den in gleichen Richtungen angetriebenen Zugelementen, bzw. Förderwegen des Fördersystems, oder ein Transferumkehrbogen zum Umlenken der Flaschenträger-Kette zwischen in entgegengesetzten Richtungen und gegebenenfalls mit unterschiedlichen Geschwindigkeiten angetriebenen Zugelementen. Diese Ausführungsform kann mit einem Speicher variabler Kapazität kooperieren, oder ohne Speicher betrieben werden, um Flaschen in unterschiedliche Förderwegen zu verteilen oder sortieren, ohne in jedem Förderweg eine durchgehende Flaschenträger-Kette anordnen zu müssen.

Da das Zugelement keine lasttragende Funktion zu erfüllen hat, kann es eine kostengünstige und einfache und leichte Gliederkette sein. Dabei können die Flaschenträger-Kette und die Gliederkette gleiche oder verschiedene Teilungen zwischen den Gliedern bzw. den Flaschenträgern aufweisen. Unterschiedliche Teilungen sind möglich, da die Zugelemente stets entlang ihrer Führungen laufen, und nur die Flaschenträger-Kette entweder entlang der Führungen oder durch den Transferbereich.

Zweckmäßig sind in der Flaschenträger-Kette aufeinanderfolgende Flaschenträger entweder in einem Schwenkgelenk oder in einem Schwenkschiebegelenk in vorzugsweise nur zwei entgegengesetzten Richtungen schwenkbar oder schwenkverschiebbar gekoppelt. Das Schwenkgelenk kann eine zur Antriebsrichtung des Zugelements im Wesentlichen senkrechte Gelenkachse aufweisen, die, zweckmäßig, auch senkrecht zu der Ebene steht, in der die Transferführung liegt. Dadurch stützen sich die Flaschenträger stabil aneinander ab, wenn sie den Transferbereich durchfahren.

Besonders zweckmäßig weist jede Magnetkupplung wenigstens einen Permanentmagneten und einen durch den Luftspalt magnetisch vom Permanentmagneten anziehbaren Ankerteil oder zweiten Permanentmagneten mit entgegengesetzter magnetischer Polarisierung am Zugelement und einem Flaschenträger auf. Der Luftspalt wird durch Führungselemente des Zugelements und der Flaschenträger-Kette festgelegt. Entlang des sich mit dem Zugelement in der Wegstrecke überdeckenden Trums der Flaschenträger-Kette liegen viele Kupplungspunkte mit im Wesentlichen gleichen Kupplungskräften vor, so dass die Zugkraft des Zugelementes gleichmäßig verteilt übertragen wird.

Günstig ist es, die Relativbewegung, die durch die Transferführung erzwungen wird, in einer durch die Transferführung definierten Ebene zu orientieren, in der die Anzugsrichtung jeder Magnetkupplung liegt oder zu der diese senkrecht ist. Im ersten Fall wird die Magnetkupplung durch Vergrößern des Luftspalts geöffnet, während im zweiten Fall die Lösebewegung eine parallele relative Wischbewegung ohne nennenswerte Veränderung der Weite des Luftspalts ist. Die Haltekraft der Magnetkupplung lässt im zweiten Fall aufgrund der sich bei der relativen Wischbewegung verringernden Flächenüberdeckung zwischen den kooperierenden Magnetelementen etwas harmonischer nach als im ersten Fall mit raschem Öffnen der Magnetkupplung. Der jeweilige Einrückvorgang läuft genauso, nur umgekehrt, ab.

Abhängig von der Art und Weise, wie die Flaschen transportiert werden, das heißt z.B. stehend, liegend, hängend oder dgl. wird in der Wegstrecke die Flaschenträger-Kette entweder oberhalb bzw. unterhalb des Zugelements oder seitlich daneben geführt.

Die Permanentmagneten bzw. Ankerteile können platten- oder scheibenförmig ausgebildet sein und werden auf Stützflächen angeordnet, die sich entweder außenseitig am Zugelement bzw. dem Flaschenträger befinden, oder versenkt sind, so dass keine Vorsprünge vorliegen.

Zweckmäßig ist für jeden Flaschenträger mindestens eine Magnetkupplung vorgesehen. Alternativ könnten für jeden Flaschenträger mehrere Magnetkupplungen vorgesehen werden, falls es sich um in Förderrichtung längere Flaschenträger handelt, oder könnten einige Flaschenträger sogar ohne Magnetkupplung gefördert werden.

Baulich einfach weist jeder Flaschenträger wenigstens eine Flaschenstandfläche, vorzugsweise, mit wenigstens einem Anschlag für eine Flasche, oder wenigstens einen Flaschengreifer auf, abhängig von der gewünschten Transportart der Flaschen.

Aus Kostengründen ist es zweckmäßig, die Flaschenträger als im Wesentlichen identische Kunststoff-Spitzgussteile auszubilden. Dadurch gestaltet sich die Flaschenträger-Kette kostengünstig und leicht, was im Zusammenspiel mit einer grazilen und leichten Gliederkette als Zugelement trotz hoher Fördergeschwindigkeiten nur relativ geringe Antriebskräfte erfordert.

Bei einer zweckmäßigen Ausführungsform weist der Transferumkehrbogen als Transferführung wenigstens ein an der Flaschenträger-Kette an der Bogenaußenseite angreifendes Führungselement für die Flaschenträger auf, damit diese im Transferbereich sauber geführt werden, da dort die Führungs- und Abstützwirkung der Magnetkupplungen vorübergehend entfällt.

Das Zugelement wird, vorzugsweise außerhalb des Speichers oder auch in diesem, durch zumindest einen Fördermotor angetrieben. Dank des Konzepts der Funktionstrennung könnten jedoch entlang des Zugelementes mehrere hintereinander angeordnete Fördermotoren vorgesehen werden, um die Antriebskräfte zu verteilen und die lokalen Spannungen im Zugelement niedrig zu halten. Mehrere Fördermotoren können dann sogar dicht hintereinander angeordnet sein.

In der Führung kann zumindest ein gestellfestes Seitenführungselement des Zugelements gleichzeitig ein lasttragendes und den Luftspalt einstellendes Führungselement für beispielsweise die Unterseite der Flaschenträger bilden. Diese Doppelfunktion der Seitenführung bedeutet eine bauliche Vereinfachung und stellt die Einhaltung des Luftspalts sicher.

Zumindest im Speicher können die Führungen der Zugelemente gekrümmt angeordnet sein. Vorzugsweise folgen sie einer Spiralbahn oder Wendelbahn in einem Speicherturm. Das Zugelement ist als Gliederkette ausgebildet und entweder an der zur Innenseite der Krümmung der Führung weisenden Seite mit Laufrollen ausgestattet oder dort an Laufrollen in der Führung abgestützt, um den Bewegungswiderstand so niedrig wie möglich zu halten. Hingegen kann das Hochsteigen der Gliederkette unter der Zugkraft an der Bogenaußenseite dadurch einfach verhindert werden, dass unter ein Führungselement der Führung greifende Finger an der Gliederkette das Aufsteigen verwehren. Ein Resultat ist ein vibrationsarmer, geräuscharmer und stetiger Lauf der Gliederkette selbst bei hohen Fördergeschwindigkeiten.

Eine vorteilhafte Ausführungsform ist dadurch gekennzeichnet, dass Zugketten durch eine fortlaufende Reihe von Shuttles ersetzt werden, wobei die Shuttles zwar nicht mehr mechanisch miteinander verbunden sind, aber dennoch im Verbund angesteuert werden. Von Vorteil ist eine geschwindigkeitsabhängige elektrische Ansteuerung der einlaufenden und der auslaufenden Shuttles. Das Anwählen einer solchen Ansteuerung vereinfacht den Steuerungsaufwand erheblich. Die Kopplung von einer Trägerkette zu den als sogenannte "Zug-Shuttles" ausgebildeten Shutteln kann ebenfalls mechanisch oder magnetisch oder in einer Kombination mittels einer lösbaren Verbindung erfolgen. Im Bereich einer Umlenkungwird die Trägerkette ähnlich geführt wie eine sogenannte Energiekette.

Anhand der Zeichnungen werden Ausführungsformen des Erfindungsgegenstandes erläutert. Es zeigen:
- Fig. 1: in Draufsicht und schematisch einen Ausschnitt eines Fördersystems einer Flaschenbehandlungsmaschine, mit einem Speicher,
- Fig. 2: eine maßstäblich vergrößerte Draufsicht eines Ausschnitts aus Fig. 1,
- Fig. 3: einen Schnitt in der Ebene A-A von Fig. 2,
- Fig. 4: eine Schemadraufsicht auf eine andere Konzeption eines Fördersystems,
- Fig. 5: eine Schemadraufsicht auf eine weitere Konzeption eines Fördersystems,
- Fig. 6: einen Schnitt entsprechend Fig. 3 einer weiteren Ausführungsvariante,
- Fig. 7: eine Ansicht von oben zu einer in Fig. 2 dargestellten Ausführungsform alternativen Ausführungsform, und
- Fig. 8: einen Querschnitt entlang der Linie VIII aus Fig. 7.

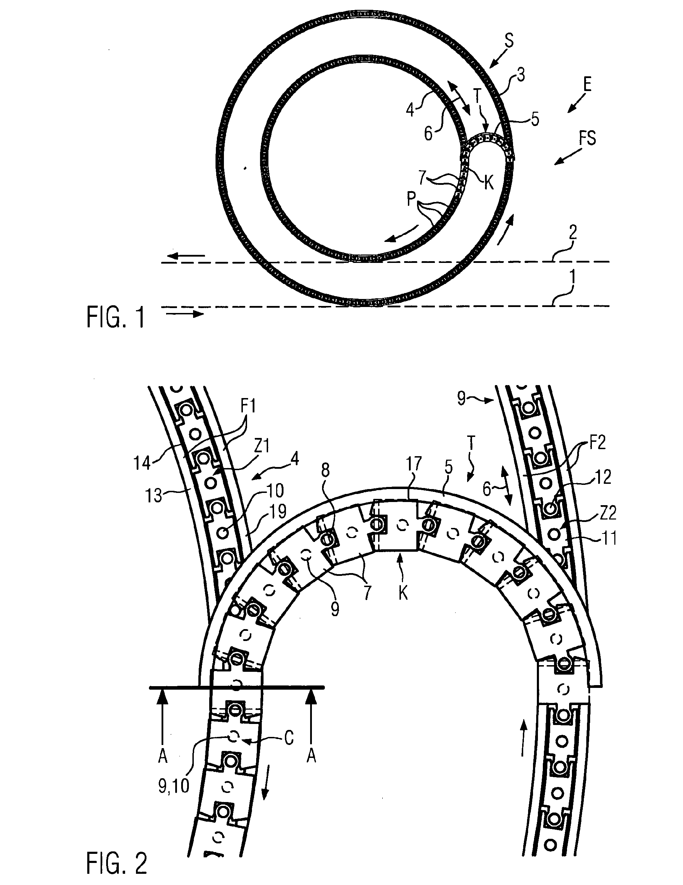

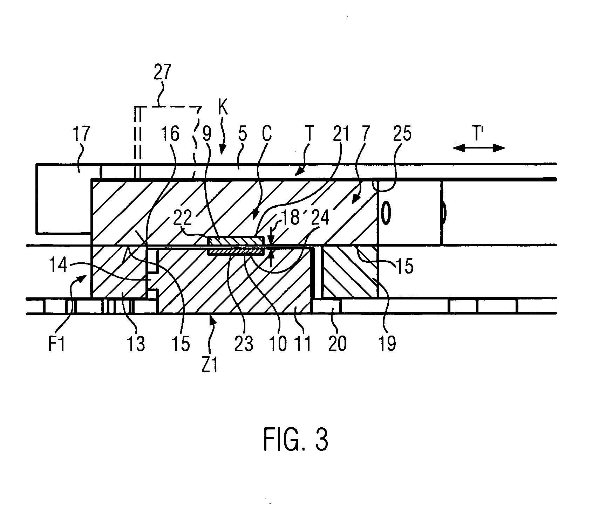

Fig. 1 zeigt einen Ausschnitt eines Fördersystems FS, beispielsweise einer Flaschenbehandlungsmaschine E, wobei sich das Fördersystem FS zwischen nicht gezeigten, Flaschen P liefernden und/oder verarbeitenden Stationen der Flaschenbehandlungs-Maschine E erstreckt. Teil des Fördersystems FS kann gemäß Fig. 1 ein Speicher S sein, der beispielsweise als Speicherturm mit spiralbahnartigen oder doppelwendelförmigen Förderwegen 3, 4 ausgebildet ist. Beispielsweise geradlinig verlaufende Förderwege 1, 2 liefern die Flaschen P an bzw. ab, von denen im Speicher S eine variable Anzahl zwischenspeicherbar ist. Entlang der jeweiligen Förderwege 1, 2, 3, 4 sind Führungen vorgesehen, die in Fig. 1 nicht hervorgehoben sind, jedoch beispielsweise anhand der Fig. 2 und 3 erläutert werden.

Im Speicher ist zumindest eine Transferführung T vorgesehen, in der gezeigten Ausführungsform ein annähernd 180° überdeckender Transferumkehrbogen 5, der in Richtung eines Doppelpfeils 6 zwischen den Förderwegen 3, 4 verfahrbar ist, um die Kapazität des Speichers S zu variieren. Die Flaschen P werden mit einer Flaschenträger-Kette K (z.B. einer Endloskettenschlaufe) stehend, hängend, liegend oder auf beliebige Weise transportiert. Die Flaschenträger-Kette K besteht aus kurvengängig miteinander gekoppelten Flaschenträgern 7.

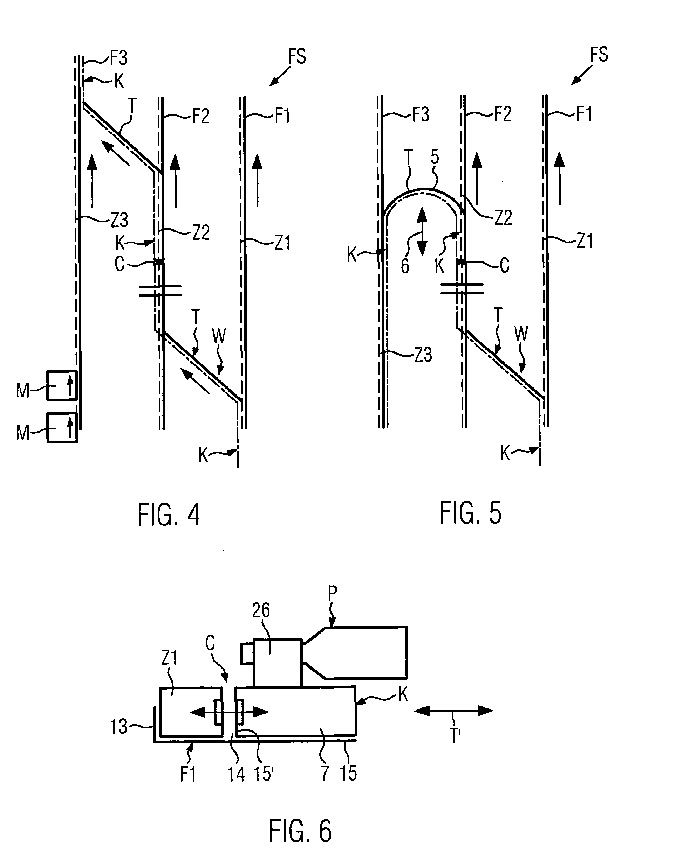

Die Fig. 2 und 3 verdeutlichen einen Transferbereich zwischen den Förderwegen 3, 4. Ein erstes Zugelement Z1 wird in einer ersten, einer Linkskrümmung folgenden Führung F1 geführt. Das Zugelement Z1 ist bspw. eine Gliederkette aus kurvengängig miteinander gekoppelten Gliedern 11 mit Schwenkgelenken 12, die zwischen außenseitigen und Innenseitigen Führungselementen 13, 19 läuft, wobei an der Innseite Rollen 14 an den Gliedern 11oder dem Führungselement 13 und an der Außenseite der Kurvenkrümmung das Führungselement 19 untergreifende Laschen 20 vorgesehen sind, die ein Hochsteigen des Zugelements Z1 unter der Zugkraft verhindern. Das Zugelement Z1 wird beispielsweise durch einen oder mehrere, gegebenenfalls dicht hintereinander platzierte, Fördermotoren M (Fig. 4) des Fördersystems FS angetrieben, der bzw. die im Speicher S oder außerhalb des Speichers S angeordnet sein kann. Die Antriebsgeschwindigkeit des Zugelements Z1 ist z.B. variabel. In einer zur ersten Führung F1 parallelen zweiten Führung F2 ist ein zweites Zugelement Z2 geführt, das von wenigstens einem eigenen Fördermotor (nicht gezeigt) angetrieben sein kann. Die ersten und zweiten Führungen F1, F2 verlaufen, vorzugsweise, über eine bestimmte Förderwegstrecke mit gleichbleibenden Abstand nebeneinander in einer Ebene T', die parallel zu der Ebene der Transferführung T ist. Die Antriebsgeschwindigkeiten der beiden Zugelemente Z1, Z2 können gleich oder unterschiedlich und variabel sein. Die Transferführung T ist in Richtung des Doppelpfeils 6 entlang der Führungen F1, F2 verschiebbar geführt, wie dies für solche Speicher konventionell ist. Die Bewegungsrichtungen der Zugelemente Z1, Z2 sind zueinander entgegengesetzt. Abhängig davon, welche Bewegungsgeschwindigkeit von beiden Zugelementen Z1, Z2 höher ist, bewegt sich die Transferführung T mit dem Zugelement Z mit einer vom Geschwindigkeitsunterschied abhängigen relativen Bewegungsgeschwindigkeit mit, das schneller läuft. Dadurch wird die Kapazität des Speichers vergrößert oder verkleinert, das heißt, es können entweder mehr Flaschen P im Speicher S zwischengespeichert werden, als abgenommen werden, oder es können mehr Flaschen P abgenommen werden, als zugeführt werden. Wenn die Bewegungsgeschwindigkeiten der beiden Zugelemente Z1, Z2 nominell gleich sind, verharrt die Transferführung T an Ort und Stelle (Abnahmerate der Flaschen P entspricht der Zulieferrate).

Bei der gezeigten Ausführungsform sind die Flaschenträger 7 durch Schwenkgelenke 8 kurvengängig miteinander gekoppelt. Bei einer nicht gezeigten Ausführungsvariante könnten hier Schwenkschiebegelenke vorgesehen sein, die ebenfalls die Kurvengängigkeit gewährleisten. Die Flaschenträger 7 sind bspw. Kunststoff-Spritzgussteile, die in der in den Fig. 2 und 3 gezeigten Ausführungsform oberseitige Flaschen-Standflächen 25 aufweisen, vorzugsweise, mit einem außenliegenden Anschlag 27 (Fig. 3) zum zusätzlichen Sichern einer stehenden Flasche P. Die Glieder 11 der Gliederkette der Zugelemente Z1, Z2 können Kunststoff-Spritzgussteile sein, zweckmäßig mit metallischen Armierungen, oder können aus Metall bestehen.

Da die Zugelemente Z1, Z2 die Antriebsgeschwindigkeit auf die lasttragende Flaschenträger-Kette K übertragen, und eine Führungswirkung in Bewegungsrichtung auf die Flaschenträger 7 ausüben, können die Zugelemente Z1, Z2 grazile, relativ leichte und einfache Gliederketten sein.

Die Zugkraft bzw. Bewegungsgeschwindigkeit jedes Zugelementes Z1 wird auf das Trum der Flaschenträger-Kette K, das über einer bestimmte Wegstrecke deckungsgleich mit dem jeweiligen Zugelement Z1, Z2 verläuft, durch mehrere Magnetkupplungen C jeweils über einen Luftspalt 18 (Fig. 3) übertragen. Jede Magnetkupplung C (es kann für jeden Flaschenträger 7 mindestens eine Magnetkupplung C vorgesehen sein) besteht bei der gezeigten Ausführungsform beispielsweise aus einem Permanentmagneten 10 an einem Glied 11 der Gliederkette und einem magnetisch entgegengesetzt polarisierten Permanentmagneten 9, hier an der Unterseite eines Flaschenträgers 7. Es könnte auch nur ein Permanentmagnet 9 oder 10 vorgesehen sein, und die andere magnetisch beaufschlagbare Komponente ein Ankerteil sein. Die Permanentmagneten 9, 10 sind platten- oder scheibenförmig und auf Stützflächen 21, 23 angebracht. Die Stützflächen 21, 23 können sich an den Außenseiten der Glieder 11 bzw. der Flaschenträger 7 befinden, oder, wie gezeigt, versenkt in Vertiefungen 22, 24, so dass die Permanentmagneten 9, 10 bzw. der jeweiligen Ankerteil nicht vorsteht, sondern gegebenenfalls sogar etwas zurücktritt.

Die innenseitigen und außenseitigen Führungselemente 19, 13 für das Zugelement Z1 sind gestellfest angeordnet. Die Oberseiten 18 der Führungselemente 19, 13 bilden gleichzeitig eine Führungsbahn für die Unterseite 16 jedes Flaschenträgers 7, so dass zwischen dem Zugelement Z1 und der Flaschenträgerkette K der Luftspalt 18 eingehalten wird, und auch die Magnetkomponenten der Magnetkupplungen C einander nicht kontaktieren. Die Kupplungskraft in jeder Magnetkupplung C wirkt in der gezeigten Ausführungsform in etwa senkrecht zu der Ebene T', in welcher die Transferführung T die Flaschenträger-Kette K von einem Zugelement Z1 zum anderen Z2 umlenkt. Dabei wird jeder Flaschenträger 7 in eine relative Schwenkbewegung im Schwenkgelenk 8 gegenüber dem Glied 11 des Zugelements gezwungen. Die Schwenkbewegung erfolgt in der Ebene T' der Transferführung T, wobei die jeweilige Magnetkupplung C in einem parallelen, wischenden Bewegungsverlauf gelöst bzw. eingerückt wird.

Die als Transferumkehrbogen 5 ausgebildete Transferführung T kann zum Transferieren ein zusätzliches Führungselement 17 z.B. für die obere Außenkante jedes Flaschenträgers 7 aufweisen, das sowohl beim Lösen als auch beim Einrücken der Magnetkupplung C und während der Transfer- bzw. Umlenkbewegung mitwirkt. Die eingerückten Magnetkupplungen C übertragen nicht nur die Antriebsgeschwindigkeit, sondern stabilisieren und führen die laufende Flaschenträger-Kette A.

In den in den Fig. 4 und 5 ausschnittsweise und schematisch angedeuteten Konzeptionen von Fördersystemen FS sind mindestens zwei nebeneinander verlaufende Führungen F1, F2 vorgesehen, in denen jeweils ein Zugelement Z1, Z2 geführt ist. Die Zugelemente Z1,Z2 werden in der gleichen Richtung angetrieben, beispielsweise synchron oder mit unterschiedlichen Geschwindigkeiten. Die Transferführung T ist als betätigbare oder fest installierte Weiche W ausgebildet, um der vom jeweiligen Zugelement Z1 bzw. Z2 angetriebenen Flaschenträger-Kette K beispielsweise zum Sortieren oder Verteilen von Flaschenströmen, einen Spurwechsel zu ermöglichen. Die Flaschenträger-Kette K ist mit dem jeweiligen Zugelement F1, F2 über Magnetkupplungen C dort gekuppelt, wo sich Trume der Flaschenträger-Kette K mit den Zugelementen Z1, Z2 decken. Die Magnetkupplungen C werden durch die von der Transferführung T erzwungene Relativbewegung zwischen der Flaschenträger-Kette K und dem jeweiligen Zugelement Z selbsttätig gelöst bzw. eingerückt. Falls die Zugelemente Z1, Z2 unterschiedliche Geschwindigkeiten haben sollten, kann die Transferführung T entlang der Führungen F1, F2 bewegbar sein. In Fig. 4 ist eine dritte Führung F1 für ein drittes Zugelement Z3 vorgesehen, das die gleiche Bewegungsrichtung hat wie die Zugelemente Z1, Z2. Eine weitere Transferführung T (Weiche W) ermöglicht das Transferieren der Flaschenträger-Kette K auch zum dritten Zugelement Z3. Fig. 4 verdeutlicht auch zumindest zwei Fördermotoren M, die zum Antrieb mindestens eines , mehrerer oder aller Zugelemente hintereinander, vorzugsweise dicht hintereinander, angeordnet sind.

In der Ausführungsform in Fig. 5 wird das dritte Zugelement Z3, das in zur Bewegungsrichtung der ersten und zweiten Zugelemente Z1, Z2 entgegengesetzter Richtung angetrieben. Die nominelle Geschwindigkeit des dritten Zugelements Z3 kann gleich der nominellen Antriebsgeschwindigkeit der anderen Zugelemente Z1 und/oder Z2 sein, oder davon verschieden und/oder variabel. In diesem Fall ist die Transferführung T wiederum Transferumkehrbogen 5, der die Flaschenträger-Kette K z.B. über 180° umlenkt und, gegebenenfalls, in Richtung des Doppelpfeils 6 verfahrbar ist. Auch in Fig. 5 sind die selbsttätig lösbaren und einrückbaren Magnetkupplungen C vorgesehen, um die jeweilige Antriebsgeschwindigkeit schlupffrei auf die Flaschenträger-Kette K zu übertragen. Im Transferierbereich bleiben die Flaschen auf der Flaschenträger-Kette K, während diese die Spur bzw. den Förderweg wechselt. Es ist nur eine Flaschenträger-Kette K (z.B. eine Endloskette) erforderlich, und zu deren Antrieb zwei oder drei oder mehrere einfache Zugelemente Z1 - Z3.

In der Ausführungsform in Fig. 6 ist im Unterschied zur in Fig. 3 gezeigten Ausführungsform jeder Flaschenträger 7, z.B. in einem Speicher S, seitlich neben dem Zugelement Z1 angeordnet und geführt. Zu der Die Magnetkupplung C wirkt die Kupplungskraft parallel zu der Ebene T', in welcher die Transferführung T die Relativbewegung der Flaschenträger-Kette K relativ zu dem jeweiligen Zugelement Z1 erzwingt, um einen Transfer durchzuführen, um die Magnetkupplung durch Aufklappen oder Zuklappen selbsttätig zu lösen oder einzurücken. Das Zugelement Z1 ist zwischen den bogeninnen- und außenseitigen Führungselementen 13, 14 der Führung F1 geführt, während jeder Flaschenträger 7 auf der gestellfesten Führung 15 und seitlich in einem Führungselement 15' beispielsweise mit Führungsrollen 14 unter der Kupplungskraft der Magnetkupplung C geführt ist. In dieser Ausführungsform ist auf dem Flaschenträger 7 wenigstens ein Flaschengreifer 26 oberseitig angeordnet, der eine Flasche P beispielsweise liegend hält.

Bei einer nicht gezeigten Alternative, z.B. zum hängenden Transportieren von Flaschen P, könnte die Flaschenträger-Kette K auch unterhalb des jeweiligen Zugelements Z1, Z2 angeordnet sein und von diesem angetrieben und an Führungselementen geführt und gestützt werden.

Die Permanentmagneten 9 und/oder 10 sind zweckmäßig aus Neodym oder anderen seltenen Erden hergestellt, so dass sie bei kleiner Baugröße und geringem Gewicht über lange Standzeiten hohe Leistungsdichte haben.

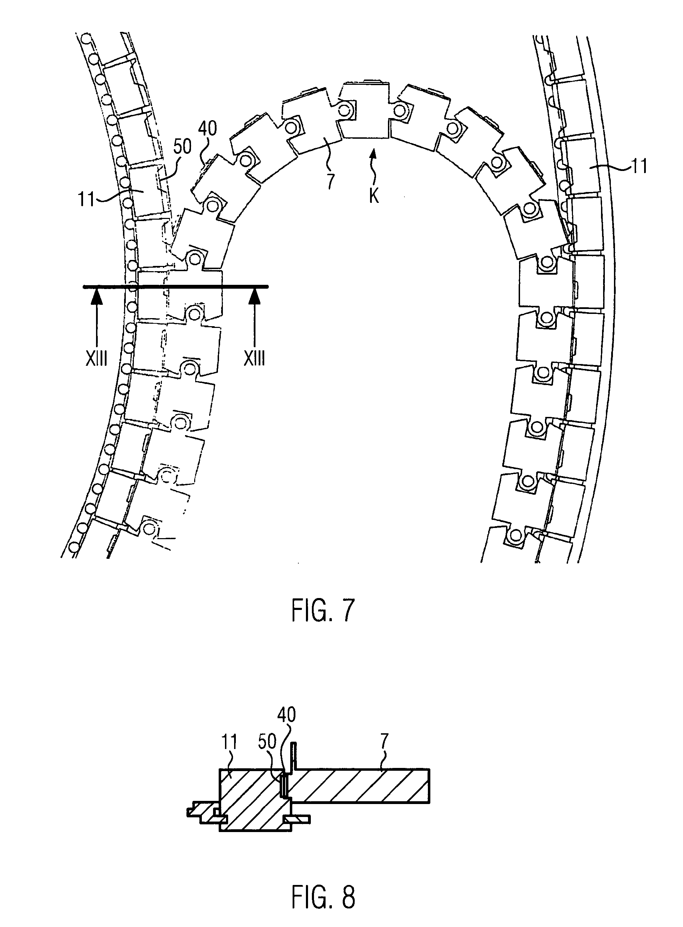

Die Flaschenträger-Kette K der Ausführungsform der Figuren 7 und 8 besteht wiederum aus kurvengängig miteinander gekoppelten Flaschenträgern 7. Die einzelnen Flaschenträger 7 stehen magnetisch oder mechanisch lösbar mit den Gliedern 11 in Wirkzusammenhang. Die Glieder 11 können auch als Shuttle bezeichnet werden.

Ein Vorsprung 40 der Flaschenträger 7 greift dabei in eine Ausnehmung 50 eines Gliedes ein, wie in der Ausführungsform der Fig. 7 gut zu erkennen ist und in der Ausführungsform in Fig. 8 auch im Schnitt zu erkennen ist. Dort ist auch ein form- und/oder kraftschlüssiges Verbinden eines Gliedes 11 mit einem Flaschenträger 7 schematisch dargestellt. Die Verbindung ist magnetisch oder mechanisch erreicht und wieder lösbar ausgestaltet.

## Patentansprüche

1. Fördersystem (FS), insbesondere mit wenigstens einem Speicher (S) variabler Kapazität, für eine Flaschen-Behandlungsmaschine (E), wobei wenigstens zwei nebeneinander benachbart verlaufende Führungen (F1-F3) und wenigstens eine Transferführung (T) für eine Flaschenträger-Kette (K) aus kurvengängig gekoppelten Flaschenträgern (7) vorgesehen und die Trume der über die Transferführung (T) von einer Führung zur benachbarten Führung transferierbaren Flaschenträger-Kette (K) entlang der Führungen (F1-F3) antreibbar sind, **dadurch gekennzeichnet, dass** jede Führung (F1-F3) ein durchgehendes, von wenigstens einem Förderantrieb (M) des Fördersystems (FS) antreibbares Zugelement (Z1-Z3) aufweist, und dass ein jeweiliges Trum der Flaschenträger-Kette (K) eine bestimmte Wegstrecke entlang eines Zugelementes (Z1-Z3) von diesem getrennt geführt und durch einen Luftspalt (18) von dem Zugelement (Z1-Z3) getrennt vom jeweiligen Zugelement (Z1-Z3) mittels mehrere Magnetkupplungen (C) angetrieben wird, die im Bereich der Transferführung (T) selbsttätig lösbar und einrückbar sind.

2. Fördersystem nach Anspruch 1, **dadurch gekennzeichnet, dass** jede Magnetkupplung (C) durch eine von der Transferführung (T) erzwungene Relativbewegung zumindest eines Flaschenträgers (7) gegenüber dem Zugelement (Z1-Z3) lösbar und einrückbar ist.

3. Fördersystem nach Anspruch 1, **dadurch gekennzeichnet, dass** zumindest im Speicher (S) die Transferführung (T) ein entlang der Führungen (F1, F2) verfahrbarer Transferumkehrbogen (5) für die endlos ausgebildete Flaschenträger-Kette (K) ist, dass die Zugelemente (Z1, Z2) in entgegengesetzten Richtungen mit variablen Geschwindigkeiten, vorzugsweise voneinander unabhängig, entlang der Führungen (F1, F2) antreibbar sind, und dass die Magnetkupplungen (C) durch den Transferumkehrbogen (5) selbsttätig lösbar und einrückbar sind.

4. Fördersystem nach Anspruch 1, **dadurch gekennzeichnet, dass** zwei oder mehr als zwei Führungen (F1-F3) mit je einem Zugelement (Z1-Z3) vorgesehen sind, dass zumindest zwei Zugelemente (Z1, Z2) in gleichen Richtungen angetrieben sind, und dass die Transferführung (T) entweder eine Weiche (W) zum Spurwechsel der Flaschenträger-Kette (K) zwischen in gleichen Richtungen angetriebenen Zugelementen (Z1, Z2) oder ein Transferumkehrbogen (5) zum Umlenken der Flaschenträger-Kette (K) zwischen in entgegengesetzten Richtungen und gegebenenfalls mit unterschiedlichen Geschwindigkeiten angetriebenen Zugelementen (Z2, Z3) ist.

5. Fördersystem nach wenigstens einem der vorhergehenden Ansprüche, **dadurch gekennzeichnet, dass** das Zugelement (Z1-Z3) eine Gliederkette mit Gliedern (11) ist, und dass, vorzugsweise, die Flaschenträger-Kette (K) und die Gliederkette gleiche oder verschiedene Teilungen aufweisen.

6. Fördersystem nach Anspruch 1, **dadurch gekennzeichnet, dass** aufeinanderfolgende Flaschenträger (7) in einem Schwenkgelenk (8) oder Schwenkschiebegelenk mit zur Antriebsrichtung des Zugelements (Z1, Z2) im Wesentlichen senkrechter Gelenkachse in zwei entgegengesetzten Richtungen schwenkbar oder schwenkverschiebbar gekoppelt sind.

7. Fördersystem nach Anspruch 1, **dadurch gekennzeichnet, dass** jede Magnetkupplung (C) wenigstens einen Permanentmagneten (9, 10) und einen durch den Luftspalt (18) magnetisch vom Permanentmagneten (9, 10) anziehbaren Ankerteil oder zweiten Permanentmagneten mit entgegengesetzter magnetischer Polarisierung am Zugelement (Z1-Z3) und einem Flaschenträger (7) aufweist, und dass der Luftspalt (18) durch Führungselemente (20, 13, 19) der Führung (F1-F3) des Zugelements (Z1-Z3) und der Flaschenträger-Kette (K) festgelegt ist.

8. Fördersystem nach Anspruch 2, **dadurch gekennzeichnet, dass** die Relativbewegung in einer durch die Transferführung (T) definierten Ebene (T') erzwingbar ist, und dass die Anzugsrichtung jeder Magnetkupplung (C) im Wesentlichen entweder in oder senkrecht zu der Ebene (T') liegt.

9. Fördersystem nach Anspruch 1, **dadurch gekennzeichnet, dass** in der Wegstrecke die Flaschenträger-Kette (K) entweder oberhalb bzw. unterhalb des Zugelements (Z1-Z3) oder seitlich neben dem Zugelement (Z1-Z3) geführt wird.

10. Fördersystem nach Anspruch 7, **dadurch gekennzeichnet, dass** die Permanentmagneten (9, 10) bzw. Ankerteile (9, 10) platten- oder scheibenförmig ausgebildet und auf außenseitigen oder versenkten Stützflächen (21, 23) des Zugelements (Z1-Z3) bzw. der Flaschenträger (7) angeordnet sind.

11. Fördersystem nach Anspruch 1, **dadurch gekennzeichnet, dass** für jeden Flaschenträger (7) mindestens eine Magnetkupplung (C) vorgesehen ist.

12. Fördersystem nach Anspruch 1, **dadurch gekennzeichnet, dass** der Flaschenträger (7) wenigstens eine Flaschenstandfläche (25), vorzugsweise mit einem außenseitigen Anschlag (27), oder wenigstens einen Flaschengreifer (26) aufweist.

13. Fördersystem nach Anspruch 1, **dadurch gekennzeichnet, dass** die Flaschenträger (7) zumindest im Wesentlichen identische Kunststoff-Spritzgussteile sind.

14. Fördersystem nach Anspruch 3, **dadurch gekennzeichnet, dass** der Transferumkehrbogen (5) wenigstens ein an der Flaschenträger-Kette (K) an der Bogenaußenseite angreifendes Führungselement (17) für die Flaschenträger (7) aufweist.

15. Fördersystem nach Anspruch 1, **dadurch gekennzeichnet, dass** das Zugelement (Z1-Z3), vorzugsweise außerhalb des Speichers (S), entweder durch einen Fördermotor (M) oder gleichzeitig durch mehrere, vorzugsweise dicht hintereinander angeordnete, Fördermotoren (M), antreibbar ist.

16. Fördersystem nach Anspruch 1, **dadurch gekennzeichnet, dass** in der Führung (F1-F3) ein gestellfestes Seitenführungselement des Zugelements (Z1-Z3) gleichzeitig ein lasttragendes und den Luftspalt (18) einstellendes Führungselement (15) für die Unterseiten der Flaschenträger (7) bildet.

17. Fördersystem nach Anspruch 3, **dadurch gekennzeichnet, dass** zumindest im Speicher (S) die Führungen (F1, F2) der Zugelemente (Z1, Z2) gekrümmt, vorzugsweise einer Spiralbahn oder Förderwegewendel eines Speicherturms folgend, angeordnet sind, und dass das als Gliederkette ausgebildete Zugelement (Z1, Z2) in der zur Innenseite der Krümmung der Führung (F1, F2) weisenden Seite mit Laufrollen (14) ausgestattet ist und an der zur Außenseite der Krümmung weisenden Seite durch an der Gliederkette angeordnete, unter ein Führungselement (19) der Führung (F1, F2) greifende Finger (20) gegen Aufsteigen gehindert wird.

## Claims

1. Conveyor system (FS), in particular with at least one variable capacity storage (S) for a bottle treatment machine (E), wherein at least two guides (F1-F3) running laterally adjacent and at least one transfer guide (T) are provided for a bottle carrier chain (K) of curve-going coupled bottle carriers (7), and the runs of the bottle carrier chain (K) being transferable from one guide to the adjacent guide via the transfer guide (T) are drivable along the guides (F1-F3), **characterised in that** each guide (F1-F3) comprises a continuous tension member (Z1-Z3) drivable by at least one conveyor drive (M) of the conveyor system (FS), and **in that** a respective run of the bottle carrier chain (K) is guided a certain distance along a tension member (Z1-Z3) separated from it and separated from the tension member (Z1-Z3) by an air gap (18) is driven by the respective tension member (Z1-Z3) by means of a plurality of magnetic couplings (C), which in the area of the transfer guide (T) are automatically releasable and engagable.

2. Conveyor system according to claim 1, **characterised in that** each magnetic coupling (C) is releasable and engagable by a relative movement of at least one bottle carrier (7) relative to the tension member (Z1-Z3) forced by the transfer guide (T).

3. Conveyor system according to claim 1, **characterised in that** at least in the storage (S), the transfer guide (T) is a transfer return bend (5), disposed movably along the guides (F1, F2) for the bottle carrier chain (K) formed in an endless manner, **in that** the tension members (Z1, Z2) are drivable along the guides (F1, F2) in opposite directions at variable speeds, preferably, independently of each other, and **in that** the magnetic couplings (C) are automatically releasable and engagable by the transfer return bend (5).

4. Conveyor system according to claim 1, **characterised in that** two or more than two guides (F1-F3) are provided, each comprising one tension member (Z1-Z3), **in that** at least two tension members (Z1, Z2) are driven in the same directions, and **in that** the transfer guide (T) is either a switch (W) for changing paths of the bottle carrier chain (K) between said tension members (Z1, Z2) driven in the same direction or a transfer return bend (5) for deflecting the bottle carrier chain (K) between said tension members (Z2, Z3) driven in opposite directions and possibly at different speeds.

5. Conveyor system according to at least one of the preceding claims, **characterised in that** the tension member (Z1-Z3) is a link chain with links (11), and **in that** the bottle carrier chain (K) and the link chain preferably comprise identical or different partitions.

6. Conveyor system according to claim 1, **characterised in that** consecutive bottle carriers (7) are coupled to each other in a pivot joint (8) or in a pivot/slide joint having a joint axis being substantially perpendicular to the drive direction of the tension member (Z1, Z2) in a pivotable or pivotable/slidable manner in two opposite directions.

7. Conveyor system according to claim 1, **characterised in that** each magnetic coupling (C) comprises at least one permanent magnet (9, 10) and one armature element, magnetically attractable by the permanent magnet (9, 10) across the air gap (18), or a second permanent magnet with opposite magnetic polarisation at the tension member (Z1-Z3), and a bottle carrier (7), and **in that** the air gap (18) is determined by guide elements (20, 13, 19) of the guide (F1-F3) of the tension member (Z1-Z3) and the bottle carrier chain (K).

8. Conveyor system according to claim 2, **characterised in that** the relative movement is forcible in a plane (T') defined by the transfer guide (T) and **in that** the direction of engagement of each magnetic coupling (C) is substantially either in or perpendicular to the plane (T').

9. Conveyor system according to claim 1, **characterised in that** in the path, the bottle carrier chain (K) is guided either above or below the tension member (Z1-Z3), respectively, or laterally adjacent to the tension member (Z1-Z3).

10. Conveyor system according to claim 7, **characterised in that** the permanent magnets (9, 10) or armature parts (9, 10), respectively, are formed plate-like or disc-shaped and are arranged on outside or sunk-in support surfaces (21, 23) of the tension member (Z1-Z3) or the bottle carriers (7), respectively.

11. Conveyor system according to claim 1, **characterised in that** each bottle carrier (7) is provided with at least one magnetic coupling (C).

12. Conveyor system according to claim 1, **characterised in that** the bottle carrier (7) comprises at least one bottle platform (25), preferably with one outside stop (27) or at least one bottle gripper (26).

13. Conveyor system according to claim 1, **characterised in that** the bottle carriers (7) are at least substantially identical injection-moulded plastic elements.

14. Conveyor system according to claim 3, **characterised in that** the transfer return bend (5) comprises at least one guide element (17) for the bottle carrier (7) engaging with the bottle carrier chain (K) at the outer side of the bend.

15. Conveyor system according to claim 1, **characterised in that** the tension member (Z1-Z3) is preferably drivable outside of the storage (S) either by one conveyor motor (M) or simultaneously by a plurality of conveyor motors (M) preferably arranged closely consecutively.

16. Conveyor system according to claim 1, **characterised in that** in the guide (F1-F3), a frame-fixed side guide member of the tension member (Z1-Z3) simultaneously forms a guide member (15) bearing the load and adjusting the air gap (18) for the undersides of the bottle carriers (7).

17. Conveyor system according to claim 3, **characterised in that** at least in the storage (S), the guides (F1, F2) of the tension members (Z1, Z2) are arranged in a curved manner, preferably following a spiral path or conveyor path helix of a storage tower, and **in that** the tension member (Z1, Z2) formed as a link chain is provided with rollers (14) on the side facing the inside of the curve of the guide (F1, F2) and on the side facing the outside of the curve is prevented from ascending by fingers (20) disposed on the link chain and reaching under a guide member (19) of the guide (F1, F2).

## Revendications

1. Système de convoyage (FS), en particulier avec au moins un tampon de stockage (S) de capacité variable, pour une machine de manipulation de bouteilles (E), dans lequel sont pourvus au moins deux guides (F1-F3) voisins qui s'étendent l'un à côté de l'autre, et au moins un guide de transfert (T) pour une chaîne de porte-bouteilles (K) constituée de porte-bouteilles (7) accouplés suivant une trajectoire incurvée et les sections de la chaîne de porte-bouteilles (K), qui sont transférables via le guide de transfert (T) d'un guide au guide voisin, peuvent être entraînées le long des guides (F1-F3), **caractérisé en ce que** chaque guide (F1-F3) comporte un élément de traction (Z1-Z3) continu qui peut être entraîné par au moins un entraînement de convoyage (M) du système de convoyage (FS), et **en ce qu'**une section respective de la chaîne de porte-bouteilles (K) est conduite selon un parcours déterminé le long d'un élément de traction (Z1-Z3) séparément de celui-ci, et est entraînée à travers un intervalle (18) de l'élément de traction (Z1-Z3) séparément de l'élément de traction respectif (Z1- Z3) à l'aide de plusieurs accouplements magnétiques (C) qui peuvent être détachés et engrenés automatiquement dans la zone du guide de transfert (T).

2. Système de convoyage selon la revendication 1, **caractérisé en ce que** chaque accouplement magnétique (C) peut être détaché et engrené par un déplacement relatif forcé par le guide de transfert (T) d'au moins un porte-bouteille (7) vis-à-vis de l'élément de traction (Z1 - Z3).

3. Système de convoyage selon la revendication 1, **caractérisé en ce qu'**au moins dans le tampon de stockage (S), le guide de transfert (T) est un arc d'inversion de transfert (5) pour la chaîne de porte-bouteilles (K) à circuit fermé qui peut être déplacé le long des guides (F1, F2), **en ce que** les éléments de traction (Z1, Z2) peuvent être entraînés le long des guides (F1, F2) dans des directions opposées à des vitesses variables, préférablement indépendamment les uns des autres, et **en ce que** les accouplements magnétiques (C) peuvent être détachés et engrenés automatiquement par l'arc d'inversion de transfert (5).

4. Système de convoyage selon la revendication 1, **caractérisé en ce que** deux guides au plus (F1-F3) sont pourvus chacun d'un élément de traction (Z1-23), **en ce qu'**au moins deux éléments de traction (Z1, Z2) sont entraînés dans des directions identiques, et **en ce que** le guide de transfert (T) est soit un aiguillage (W) pour le changement de voie de la chaîne de porte-bouteilles (K) entre des éléments de traction (Z1, Z2) entraînés dans des directions identiques, soit un arc d'inversion de transfert (5) pour rediriger la chaîne de porte-bouteilles (K) dans des directions opposées et le cas échéant avec des éléments de traction (Z2, Z3) entraînés à des vitesses différentes.

5. Système de convoyage selon au moins l'une des revendications précédentes, **caractérisé en ce que** l'élément de traction (Z1-Z3) est une chaîne constituée de maillons (11), et **en ce que** la chaîne de porte-bouteilles (K) et la chaîne à maillons comportent préférablement des sections identiques ou différentes.

6. Système de convoyage selon la revendication 1, **caractérisé en ce que** les porte-bouteilles successifs (7) sont accouplés avec une articulation pivotante (8) ou une articulation pivotante et coulissante, avec des axes d'articulation essentiellement verticaux par rapport à la direction d'entraînement de l'élément de traction (Z1, Z2) et pivotants dans deux directions opposées ou de manière pivotante et coulissante.

7. Système de convoyage selon la revendication 1, **caractérisé en ce que** chaque accouplement magnétique (C) comporte au moins un aimant permanent (9, 10) et un élément d'ancrage qui peut être attiré magnétiquement par des aimants permanents (9, 10) à travers l'intervalle (18) ou un deuxième aimant permanent à polarisation magnétique opposée sur l'élément de traction (Z1-Z3) et sur un porte-bouteille (7), et **en ce que** l'intervalle (18) est déterminé par des éléments de guidage (20, 13, 19) du guide (F1-F3) de l'élément de traction (Z1-Z3) et par la chaîne de porte-bouteilles (K).

8. Système de convoyage selon la revendication 2, **caractérisé en ce que** le déplacement relatif peut être forcé dans un plan (T') défini par le guide de transfert (T), et **en ce que** la direction d'attraction de chaque accouplement magnétique (C) se trouve essentiellement dans le plan (T') ou est perpendiculaire à celui-ci.

9. Système de convoyage selon la revendication 1, **caractérisé en ce que** la chaîne de porte-bouteilles (K) est menée sur le parcours soit au-dessus ou en dessous de l'élément de traction (Z1-Z3), soit latéralement à côté de l'élément de traction (Z1-Z3).

10. Système de convoyage selon la revendication 7, **caractérisé en ce que** les aimants permanents (9, 10) ou les éléments d'ancrage (9, 10) sont conformés comme des plaques ou des disques, et sont agencés sur des surfaces d'appui (21, 23) externes ou renfoncées de l'élément de traction (Z1-Z3) ou des porte-bouteilles (7).

11. Système de convoyage selon la revendication 1, **caractérisé en ce qu'**au moins un accouplement magnétique (C) est pourvu pour chaque porte-bouteilles (7).

12. Système de convoyage selon la revendication 1, **caractérisé en ce que** les porte-bouteilles (7) comportent au moins une surface d'appui de bouteille (25), préférablement avec une butée externe (27), ou au moins une pince de bouteille (26).

13. Système de convoyage selon la revendication 1, **caractérisé en ce que** les porte-bouteilles (7) sont des pièces en plastique moulées par injection au moins sensiblement identiques.

14. Système de convoyage selon la revendication 3, **caractérisé en ce que** l'arc d'inversion de transfert (5) comporte au moins un élément de guidage (17) pour les porte-bouteilles (7) qui entre en contact avec la chaîne de porte-bouteilles (K) du côté externe de l'arc.

15. Système de convoyage selon la revendication 1, **caractérisé en ce que** l'élément de traction (Z1-Z3) peut être entraîné préférablement à l'extérieur du tampon de stockage (S) soit par un moteur de convoyeur (M), soit simultanément par plusieurs moteurs de convoyeur (M) préférablement agencés en séquence rapprochée.

16. Système de convoyage selon la revendication 1, caractérisé en que dans le guide (F1-F3), un élément de guidage latéral de l'élément de traction (Z1-Z3) fixe par rapport au châssis constitue en même temps un élément de guidage (15) porteur de charge et de réglage de l'intervalle (18) pour les faces inférieures des porte-bouteilles (7).

17. Système de convoyage selon la revendication 3, **caractérisé en ce qu'**au moins dans le tampon de stockage (S), les guides (F1, F2) des éléments de traction (Z1, Z2) sont incurvés et préférablement agencés en suivant une trajectoire en spirale ou une boucle de trajectoire de convoyage d'une section de tampon de stockage, et **en ce que** l'élément de traction (Z1, Z2) constitué sous forme d'une chaîne à maillons est équipé de galets (14) sur le côté dirigé vers le côté interne de la courbure du guide (F1, F2) et restreint pour qu'il ne puisse pas se soulever par des doigts (20) agencés sur la chaîne à maillons et engagés sous un élément de guidage (19) du guide (F1, F2), sur le côté dirigé vers le côté externe de la courbure.
